# EUROPEAN PATENT SPECIFICATION

(11) **EP 1 950 460 B1**
(45) Date of publication and mention of the grant of the patent: **24.12.2014**
(21) Application number: 08250286.5
(22) Date of filing: 23.01.2008
(51) Int. Cl.: F16H 57/04, F01M 1/02, F16D 25/12, F16D 43/10

(54) **Engine unit and straddle-type vehicle provided with the same**
Motoreinheit und Grätschsitz-Fahrzeug damit
Unité de moteur et véhicule du type à enfourcher doté de celle-ci

(30) Priority: 26.01.2007 JP 2007016492
(43) Date of publication of application: 30.07.2008
(73) Proprietor: Yamaha Hatsudoki Kabushiki Kaisha, Iwata-shi, Shizuoka 438-8501 (JP)
(72) Inventor: Ishida, Yousuke c/o Yamaha Hatsudoki Kabushiki Kaisha, Shizuoka-ken 438-8501 (JP); Oishi, Akifumi c/o Yamaha Hatsudoki Kabushiki Kaisha, Shizuoka-ken 438-8501 (JP)
(74) Representative: Grünecker, Kinkeldey, Stockmair & Schwanhäusser

(56) References cited:
- US-A1- 2006 128 510

## Description

### BACKGROUND

The present invention relates to an engine unit according to the preamble of independent claim 1 and a straddle-type vehicle provided with the same.

Such an engine unit and a straddle-type vehicle comprising such engine unit can be taken from the prior art document US 2006/0128510 A1.

Generally, an engine for motorcycles comprises a clutch mechanism, which transmits rotation of a crank shaft to an output shaft, or cuts off the rotation. As such clutch mechanism, there is known an automatic centrifugal type clutch mechanism having a bowl-shaped outer clutch, of which an axial end is opened, fixed to an output side thereof and arranging an input member in the outer clutch to fix the same to an input side thereof (see, for example, JP-A-2001-3723). There is also known a wet multi-disc type clutch mechanism having a multiplicity of inner and outer clutch plates interposed between an outer clutch fixed to an input side thereof and an inner clutch fixed to an output side thereof (see, for example, JP-B-6-65894).

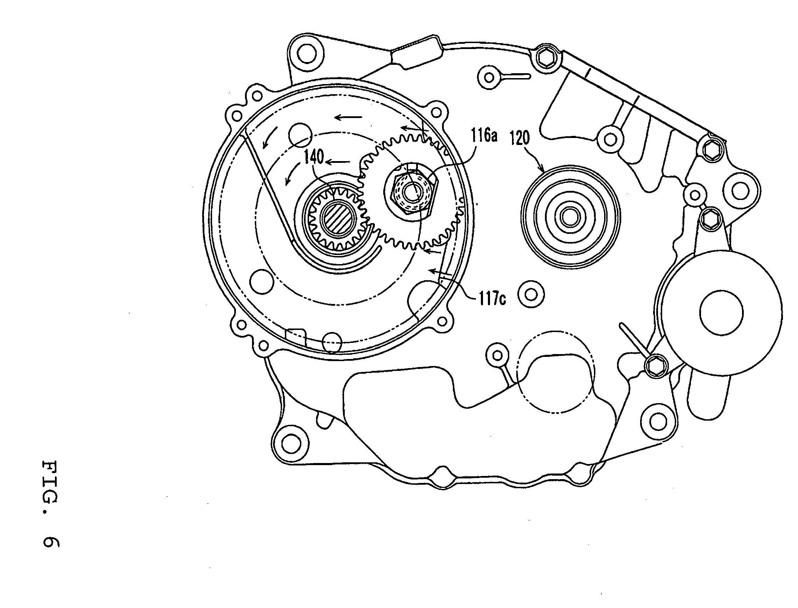

With various wet type clutch mechanisms typified by such clutch mechanisms described above, there is a need to supply a lubricating oil to a clutch mechanism in order to inhibit seizure between constituent members of the clutch mechanism, such as between an outer clutch and an input member, between an inner clutch plate and an outer clutch plate, or the like. As a method of supplying a lubricating oil, there is listed, arms 120a, 120b, and a connecting rod 124 via the oil supply passage 120d. The lubricating oil as supplied scatters rearward upon rotation of the crank shaft 120. As shown in Fig. 6, an open hole 117c is formed in a clutch chamber and the scattering lubricating oil is introduced into the clutch chamber from the open hole 117c. The lubricating oil as introduced is supplied to a clutch shaft 140 and a clutch mechanism 150.

With the engine unit described in WO2003/085278 A1, however, a transmission shaft 116a is arranged between the crank shaft 120 and the clutch shaft 140. Therefore, the transmission shaft 116a prevents a lubricating oil, which is caused by rotation of the crank shaft 120 to scatter, from being supplied to the clutch shaft 140. Accordingly, there is caused a problem that it is difficult to efficiently supply a lubricating oil to the clutch shaft 140 and the clutch mechanism 150.

The invention seeks to provide an engine unit in which a lubricating oil is efficiently supplied to a clutch mechanism.

According to the present invention said object is solved by an engine unit having the features of independent claim 1. Preferred embodiments are laid down in the dependent claims.

Accordingly, it is provided an engine unit that comprises a crank shaft, a connecting rod connected to the crank shaft, a lubricating-oil supply mechanism, a clutch shaft, and a arms 120a, 120b, and a connecting rod 124 via the oil supply passage 120d. The lubricating oil as supplied scatters rearward upon rotation of the crank shaft 120. As shown in Fig. 6, an open hole 117c is formed in a clutch chamber and the scattering lubricating oil is introduced into the clutch chamber from the open hole 117c. The lubricating oil as introduced is supplied to a clutch shaft 140 and a clutch mechanism 150.

With the engine unit described in WO2003/085278 A1, however, a transmission shaft 116a is arranged between the crank shaft 120 and the clutch shaft 140. Therefore, the transmission shaft 116a prevents a lubricating oil, which is caused by rotation of the crank shaft 120 to scatter, from being supplied to the clutch shaft 140. Accordingly, there is caused a problem that it is difficult to efficiently supply a lubricating oil to the clutch shaft 140 and the clutch mechanism 150.

The invention seeks to provide an engine unit in which a lubricating oil is efficiently supplied to a clutch mechanism.

### SUMMARY

An engine unit according to the invention comprises a crank shaft, a connecting rod connected to the crank shaft, a lubricating-oil supply mechanism, a clutch shaft, and a transmission mechanism. A clutch shaft includes a clutch shaft body and a wet type clutch mechanism. The clutch shaft body is arranged in parallel to the crank shaft. The clutch mechanism is mounted to the clutch shaft body. The transmission mechanism includes a transmission shaft. The transmission shaft is arranged in parallel to the crank shaft. The transmission shaft meshes with the clutch mechanism.

The clutch shaft body is arranged closer to the crank shaft than to the transmission shaft, and the engine unit according to the invention is constructed so that a lubricating oil supplied to the connection is led to the clutch shaft.

A straddle-type vehicle according to the invention comprises such an engine unit

With an embodiment of the invention, it is possible to efficiently supply a lubricating oil to the clutch mechanism.

### BRIEF DESCRIPTION OF THE DRAWINGS

Embodiments of the invention are described hereinafter, by way of example only, with reference to the accompanying drawings.
Fig. 1 is a side view showing a motorcycle, including an example embodiment of the invention.
Fig. 2 is a side view showing the construction of an engine unit.
Fig. 3 is a cross sectional view showing the construction of the engine unit.
Fig. 4 is a side view showing the construction of an engine unit, a transmission shaft of which is arranged closer to a crank shaft than a clutch shaft is.

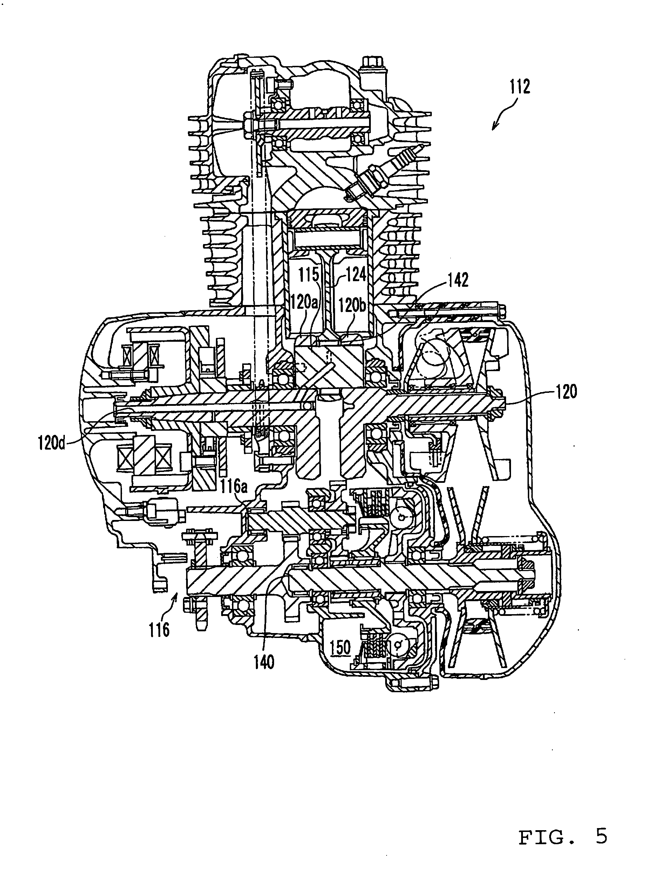

Fig. 5 is a cross sectional view showing an engine unit described in WO2003/085278 A1.
Fig. 6 is a side view showing the engine unit described in Patent WO2003/085278 A1.

### DETAILED DESCRIPTION

In an embodiment of the invention, in order to make an engine unit compact, a transmission shaft (reduction shaft), which is ordinarily arranged between an axis of rotation of a crank shaft and an axis of rotation of a clutch shaft, is positively arranged in a position more distant from the crank shaft than from the clutch shaft whereby a lubricating oil scattering from the crank shaft is efficiently fed to the clutch shaft and a clutch mechanism. A specific construction of the embodiment will be described below in detail with reference to the drawings.

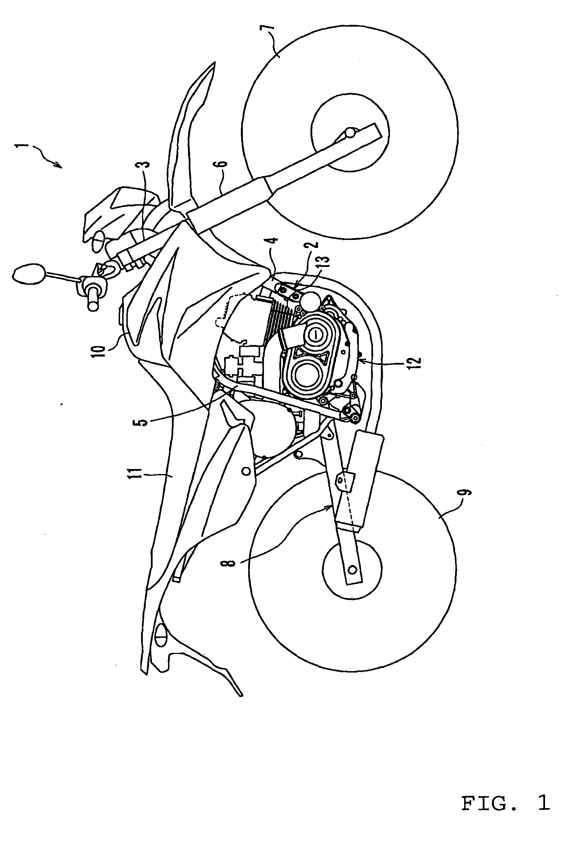

In addition, the embodiment will be described citing an offroad type motorcycle 1 shown in Fig. 1 as an example of a straddle-type vehicle, in which the invention is embodied. However, a straddle-type vehicle according to the invention is not limited to this. A straddle-type vehicle according to the invention may be a motorcycle of other types than the offroad type one. Specifically, a straddle-type vehicle according to the invention may be a motorcycle of a motorcycle type, scooter type, a so-called moped type, or the like. Also, a straddle-type vehicle according to the invention may be a straddle-type vehicle other than a motorcycle. A straddle-type vehicle according to the invention may be, for example, ATV (All Terrain Vehicle), etc.

Fig. 1 is a side view showing a motorcycle 1 according to the embodiment. First, an outline construction of the motorcycle 1 will be described mainly with reference to Fig. 1. In addition, front and rear, and left and right directions in the following descriptions are ones as seen from a rider, or driver, seated on a seat 11.

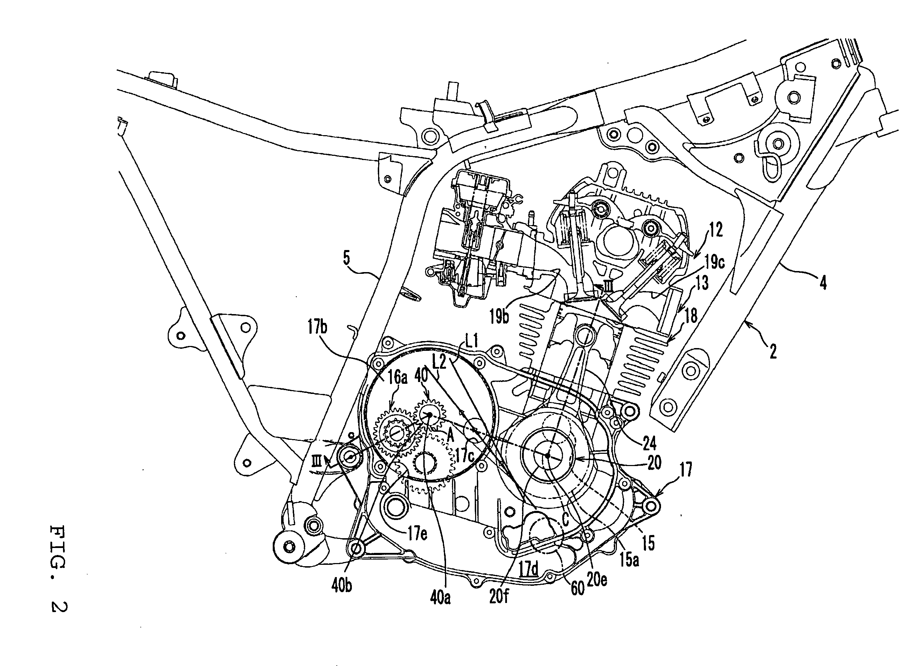

The motorcycle 1 comprises a body frame 2 . The body frame 2 comprises a head pipe 3, a downtube 4 extending downward from the head pipe 3, and a seat pillar 5 extending rearward from the head pipe 3. In addition, Fig. 2 shows only a part of the downtube 4. The head pipe 3 is connected at its lower end to a front wheel 7 through a front fork 6, etc. The body frame 2 journals a rear arm 8 extending rearward. A rear end of the rear arm 8 is connected to a rear wheel 9. A cover 10 is arranged above the body frame 2 to cover the body frame 2. The seat 11 is provided a little rearwardly of a center of the cover 10.

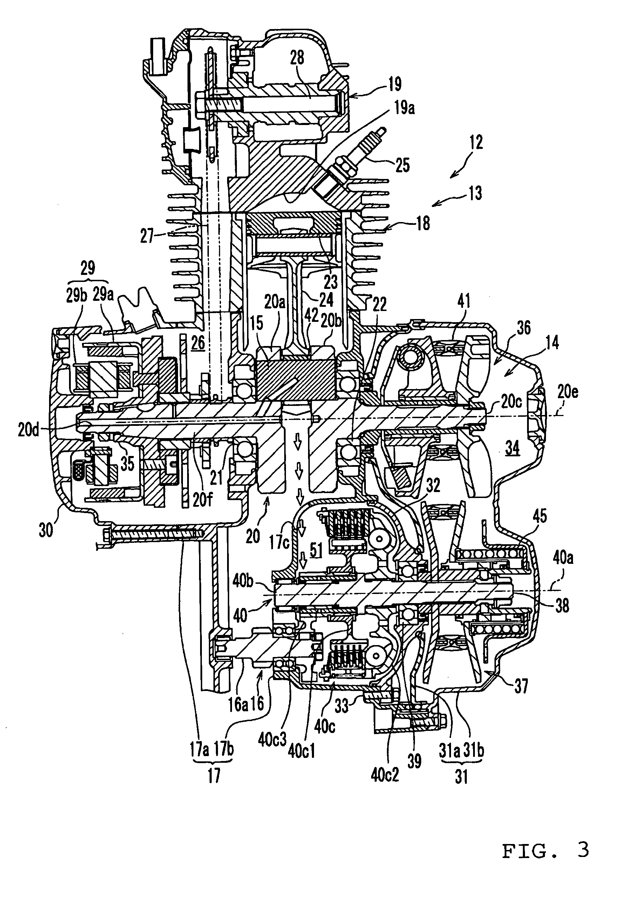

As viewed in side view, an engine unit 12 supported by the downtube 4 and the seat pillar 5 is arranged between the downtube 4 and the seat pillar 5. As shown in Figs. 2 and 3, the engine unit 12 is composed integrally of an engine 13, a belt type continuously variable transmission (referred below to as "CVT (continuously variable transmission)" 14, a centrifugal clutch 40c, a reduction mechanism 16, etc. Driving force generated in the engine unit 12 is transmitted to the rear wheel 9 through power transmission means (not shown) such as chain, belt, etc. In addition, while the engine 13 is described herein as four-stroke single cylinder engine, the engine 13 may be, for example, a two-stroke engine. Also, the engine may be a multi-cylinder engine.

The construction of the engine unit 12 will now be described mainly with reference to Fig. 3. Fig. 3 is a cross sectional view showing a part cut out along the cut line III-III in Fig. 2.

The engine unit 12 comprises the engine 13, the CVT 14, the centrifugal clutch 40c, and the reduction mechanism 16 as a transmission mechanism. Fig. 3 omits a partial construction of the reduction mechanism 16 for the convenience of explanation.

The engine 13 comprises a crank case 17, a substantially cylindrical-shaped cylinder 18, and a cylinder head 19. The crank case 17 is composed of two case blocks including a first case block 17a positioned on the left and a second case block 17b positioned on the right. The first case block 17a and the second case block 17b are arranged to butt against each other in a vehicle width direction. The cylinder 18 is connected forwardly and upwardly obliquely to the crank case 17 (Also, see Fig. 1). The cylinder head 19 is connected to a top end of the cylinder 18.

A crank shaft 20 extending horizontally in the vehicle width direction is accommodated in the crank case 17. The crank shaft 20 is supported on the first case block 17a and the second case block 17b with bearings 21, 22 therebetween. The crank shaft 20 comprises a crank-shaft body 20f and a crank pin 15.

A piston 23 is inserted slidably into the cylinder 18. One end of a connecting rod 24 is connected to a side of the piston 23 toward the crank shaft 20. The other end of the connecting rod 24 is connected to the crank-shaft body 20f by a crank pin 15 arranged between a left crank arm 20a and a right crank arm 20b of the crank shaft 20. Thereby, the piston 23 reciprocates in the cylinder 18 upon rotation of the crank shaft 20.

Formed in the cylinder head 19 are a recess 19a communicated to an internal space of the cylinder 18 and an intake port 19b and an exhaust port 19c (see Fig. 2), which communicate with the recess 19a. Also, as shown in Fig. 3, an ignition plug 25 is inserted into and fixed to the cylinder head 19 so that an ignition part at a top end thereof is exposed into the recess 19a.

A cam chain chamber 26 is formed on the left in the cylinder 18 to provide communication between an interior of the crank case 17 and an interior of the cylinder head 19. A timing chain 27 is arranged in the cam chain chamber 26. The timing chain 27 is wound round the crank shaft 20 and a cam shaft 28. Thereby, as the crank shaft 20 rotates, the cam shaft 28 also rotates, so that an intake valve and an exhaust valve, which are not shown, are opened and closed.

A generator case 30, in which a generator 29 is accommodated, is mounted detachably to a left side of a front half of the first case block 17a. On the other hand, a transmission case 31, in which the CVT 14 is accommodated, is mounted to a right side of the second case block 17b.

A clutch cover 32 is fixed detachably to the second case block 17b by a bolt 33 on the right side of the second case block 17b rearwardly of the crank shaft 20 in a manner to face the second case block 17b. According to the embodiment, the second case block 17b and the clutch cover 32 constitute a clutch case to compartment and form a clutch chamber 51, in which a clutch shaft 40 is accommodated. The clutch shaft 40 extends rightward through the clutch cover 32 to be extended into the transmission case 31 described later. The clutch shaft 40 is arranged to overlap a connection 42 in a direction along an axis 20e of rotation of the crank shaft 20 (see Figs. 2 and 3). That portion of the clutch shaft 40, which extends into the transmission case 31, constitutes a secondary sheave shaft 38.

The clutch shaft 40 comprises a clutch shaft body 40b and a wet and centrifugal type clutch 40c. The centrifugal type clutch 40c is mounted to the clutch shaft body 40b within the clutch chamber 51. The centrifugal type clutch 40c meshes with a reduction shaft 16a as a transmission shaft of the reduction mechanism 16. Specifically, the centrifugal type clutch 40c comprises a clutch boss 40c1 and a clutch housing 40c2. The clutch housing 40c2 is connected to the clutch shaft body 40b. The clutch boss 40c1 is arranged in the clutch housing 40c2. The clutch boss 40c1 is rotatable relative to the clutch shaft body 40b. The clutch housing 40c2 and the clutch boss 40c1 separate from each other when the clutch shaft body 40b is low in speed of rotation. On the other hand, when the clutch shaft body 40b is high in speed of rotation, the clutch housing 40c2 and the clutch boss 40c1 are connected to each other and the clutch boss 40c1 rotates together with the clutch housing 40c2. The clutch boss 40c1 is connected to a gear mechanism 40c3. The gear mechanism 40c3 meshes with the reduction shaft 16a. Therefore, as the clutch boss 40cl rotates, the gear mechanism 40c3 and the reduction shaft 16a rotate. Thereby, torque of the clutch shaft body 40b is transmitted to the reduction mechanism 16 through the centrifugal type clutch 40c and further transmitted to the rear wheel 9 by power transmission means (not shown) such as chain, belt, etc.

According to the embodiment, the reduction shaft 16a of the reduction mechanism 16 is arranged in a position more distant from the crank shaft 20 than from the clutch shaft 40, that is, rearward as shown in Figs. 2 and 3. In other words, the clutch shaft body 40b, to which the wet centrifugal type clutch 40c is mounted, is arranged closer to the crank shaft 20 than to the reduction shaft 16a. A construction is provided, in which any rotating shaft for prevention of oil supply to the clutch shaft 40 is not substantially existent between the axis 20e of rotation of the crank shaft 20 and an axis 40a of rotation of the clutch shaft 40. In particular, according to the embodiment, any rotating shaft is not arranged between the axis 20e of rotation of the crank shaft 20 and the axis 40a of rotation of the clutch shaft 40.

The transmission case 31 is provided on the right of and independently of the crank case 17. Specifically, the transmission case 31 comprises an inner case 31a, which covers an inner side of the CVT 14 in the vehicle width direction, and an outer case 31b, which covers an outer side of the CVT 14 in the vehicle width direction. The inner case 31a is mounted to a right side of the crank case 17. On the other hand, the outer case 31b is mounted to a right side of the inner case 31a and a belt chamber 34 is compartmented and formed by the outer case 31b and the inner case 31a.

A left end of the crank shaft 20 extends through the first case block 17a to reach an interior of the generator case 30. The generator 29 is mounted to the left end of the crank shaft 20. The generator 29 comprises a stator 29a and a rotor 29b arranged in opposition to the stator 29a. The stator 29a is fixed to the generator case 30 not to enable rotation and displacement. On the other hand, the rotor 29b is fixed non-rotatably to a sleeve 35, which rotates together with the crank shaft 20. Thereby, as the crank shaft 20 rotates, the rotor 29b rotates relative to the stator 29a to generate electric power.

The CVT 14 is accommodated in the belt chamber 34. The CVT 14 comprises a primary sheave 36 and a secondary sheave 37 arranged rearwardly of the primary sheave 36. The crank shaft 20 extends through the second case block 17b and the inner case 31a to extend to the belt chamber 34 and a right portion thereof (strictly, a portion on the right of the bearing 22) constitutes a primary sheave shaft 20c. The primary sheave 36 is journaled by the primary sheave shaft 20c. Thereby, the primary sheave 36 rotates as the crank shaft 20 rotates.

On the other hand, the secondary sheave shaft 38 made integral with the clutch shaft 40 as described above is arranged on a rear half of the transmission case 31. The secondary sheave shaft 38 is mounted to the clutch cover 32 with a bearing 39 therebetween. The secondary sheave 37 is journaled by the secondary sheave shaft 38 within belt chamber 34.

A belt 41 is wound round the secondary sheave 37 and the primary sheave 36. The belt 41 may be composed of, for example, a resin block V-belt. Therefore, when the primary sheave 36 rotates together with the crank shaft 20, torque thereof is transmitted to the secondary sheave 37 through the belt 41 and the secondary sheave shaft 38 rotates together with the secondary sheave 37. Thereby, the clutch shaft 40 made integral with the secondary sheave shaft 38 rotates and torque thereof is transmitted to the rear wheel 9 through the reduction mechanism 16.

Subsequently, a construction, in which a lubricating oil is supplied to the clutch shaft 40, according to the embodiment will be described with reference to Figs. 2 and 3. As shown in Fig. 2, an oil reservoir portion 17d is provided on a bottom of the crank case 17 to store the lubricating oil. The lubricating oil stored there is supplied to the connection 42 of the crank shaft 20 and the connecting rod 24 by an oil pump 60, which is arranged as lubricating oil supply means on the oil reservoir portion 17d in the crank case 17. Specifically, the lubricating oil drawn by the oil pump 60 is led to one or a plurality of oil supply passages 20d, which are substantially circular in shape as viewed in plan view and opened to a left end surface of the crank shaft 20, to be supplied to the connection 42 via the oil supply passage or passages 20d.

The lubricating oil as supplied scatters from the connection 42 as the crank shaft 20 rotates. Formed on the second case block 17b is an oil supply hole 17c to lead a lubricating oil, which scatters as the crank shaft 20 rotates, into the clutch chamber 51 to supply the same to the clutch shaft 40. Specifically, as shown in Fig. 2, the oil supply hole 17c is formed on the second case block 17b so that a tangent line L1 tangent to both a circular track 15a of the crank pin 15 and an outer ring of the oil supply hole 17c is positioned above a lower end A of the clutch shaft body 40b as viewed in side view. In addition, the tangent line L1 is more specifically a tangent line, which is tangent to a lower portion of the circular track 15a of the crank pin 15 and an upper portion of the oil supply hole 17c and passes between the oil supply hole 17c and the circular track 15a to extend rearward and obliquely upward. Further, the oil supply hole 17c is formed on the second case block 17b so that at least a portion thereof is positioned above a plane C including the axis of rotation of the crank shaft 20 and the axis of rotation of the clutch shaft 40. For example, the oil supply hole 17c is formed on the second case block 17b so that a center of the oil supply hole 17c is positioned on the plane C. The crank shaft 20 and the clutch shaft 40 are arranged so that portions thereof face each other with the oil supply hole 17c therebetween.

The lubricating oil introduced into the clutch chamber 51 from the oil supply hole 17c is supplied to the clutch shaft 40 and thereafter returns again to the oil reservoir portion 17d from an oil discharge hole 17e provided downwardly and a little rearwardly of the second case block 17b.

As described above, according to the embodiment, as the crank shaft 20 rotates, a lubricating oil is supplied to the clutch shaft 40. Therefore, when the crank shaft 20 and the clutch shaft 40 are increased in speed of rotation per unit time, the lubricating oil supplied to the clutch shaft 40 is correspondingly increased in quantity. Accordingly, seizure of the centrifugal type clutch 40c is surely suppressed even when the crank shaft 20 and the clutch shaft 40 are high in speed of rotation per unit time and the centrifugal type clutch 40c is relatively liable to undergo seizure.

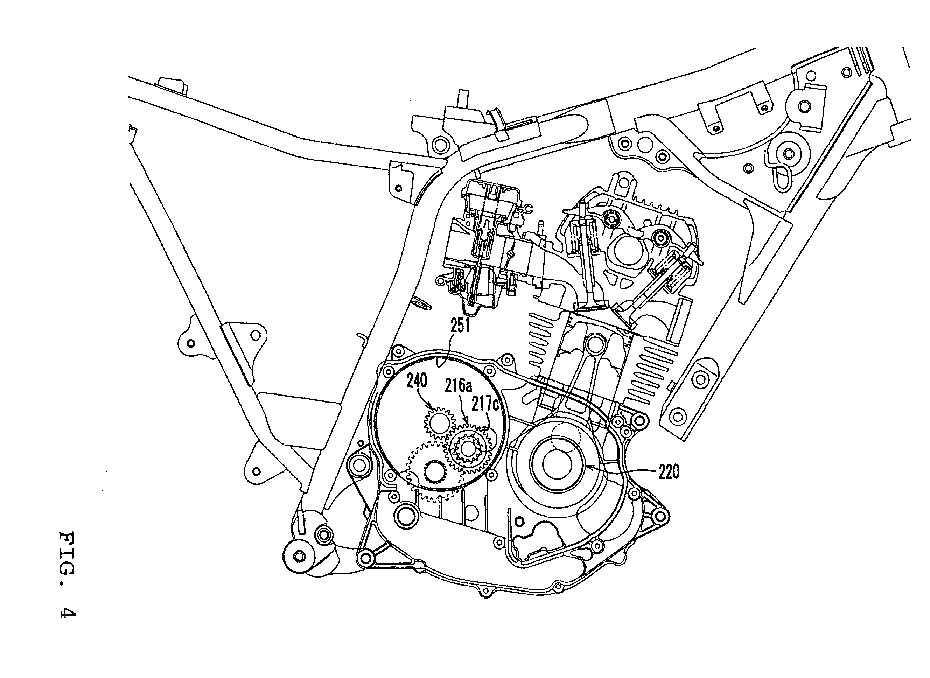

For example, with the construction shown in Fig. 4, a reduction shaft 216a inhibits a lubricating oil introduced into a clutch chamber 251 from being supplied to a clutch shaft 240. Specifically, as shown in Fig. 4, since the reduction shaft 216a is arranged closer to a crank shaft 220 than to the clutch shaft 240, a major part of the lubricating oil introduced into the clutch chamber 51 from the oil supply hole 17c strikes against the reduction shaft 216a. With the construction shown in Fig. 4, a part of the lubricating oil striking against the reduction shaft 216a to scatter is only supplied to the clutch shaft 240 and so it is difficult to efficiently supply a lubricating oil to the clutch shaft 240. Therefore, it becomes necessary to increase a lubricating oil supplied to the crank shaft 220 in quantity per unit time and to make the oil supply hole 17c large in size.

In contrast, the reduction shaft (transmission shaft) 16a normally arranged between the axis 20e of rotation of the crank shaft 20 and the axis 40a of rotation of the clutch shaft 40 as shown in Fig. 2 is arranged rearwardly of the clutch shaft 40 according to the embodiment. That is, the clutch shaft body 40b is arranged closer to the crank shaft 20 than to the reduction shaft 16a. Accordingly, the lubricating oil supplied from the connection 42 is efficiently supplied to the clutch shaft 40 without being obstructed by the reduction shaft 16a, etc. In particular, according to the embodiment, a construction is realized, in which any rotating shaft is not existent between the axis 20e of rotation of the crank shaft 20 and the axis 40a of rotation of the clutch shaft 40, and so further efficient supply of the lubricating oil to the clutch shaft 40 is realized.

Also, as far as the lubricating oil scatters mainly in a direction, in which the crank shaft 20 is tangent to the circular track 15a of the crank pin 15, owing to rotation of the crank shaft 20, the oil supply hole 17c is arranged so that the tangent line L1 tangent to both the circular track 15a of the crank pin and the outer ring of the oil supply hole 17c is positioned above the lower end A of the clutch shaft 40 as viewed in side view. Further, a tangent line L2, which is tangent to the circular track 15a and passes through a center of the oil supply hole 17c as viewed in side view, is arranged so as to be positioned above the lower end A of the clutch shaft 40. Therefore, supply of a lubricating oil to the clutch shaft 40 can be improved in efficiency. Further, from the viewpoint of an improvement in efficiency of supply, the oil supply hole 17c is preferably formed so that the tangent line L1 (L2) is positioned above the axis 40a of rotation of the clutch shaft 40 and further above an upper end of the clutch shaft body 40b. In particular, preferably, at least a portion of the oil supply hole 17c is preferably positioned above the plane C including the axis 20e of rotation of the crank shaft 20 and the axis 40a of rotation of the clutch shaft 40, and at least portions of the crank shaft 20 and the clutch shaft 40 face each other.

As described above, according to the embodiment, since efficient supply of a lubricating oil to the clutch shaft 40 is realized, seizure of the centrifugal type clutch 40c is effectively suppressed. Also, it is possible to make the oil supply hole 17c relatively small in size. Further, a large oil supply capacity per unit time is not so much demanded of the oil pump 60 and so it is possible to make the oil pump 60 and hence the engine unit 12 small in size and light in weight.

Also, according to the embodiment, as shown in Fig. 2, the plane C extends rearwardly upward. That is, the crank case 17 is arranged to be directed rearwardly upward. The secondary sheave shaft 38 is arranged in a relatively high position. Therefore, the secondary sheave shaft 38 is relatively distant from an oil surface of a lubricating oil stored in the oil reservoir portion 17d. Accordingly, even when the motorcycle 1 undergoes vibrations and fluctuation, the lubricating oil stored in the oil reservoir portion 17d scatters, and the oil surface of the lubricating oil fluctuates, the lubricating oil stored in the oil reservoir portion 17d is inhibited from being supplied in large quantity directly to the clutch shaft 40. Consequently, the lubricating oil is inhibited from being excessively supplied to the centrifugal type clutch 40c. Accordingly, it is possible to suppress loss in energy transmission to the centrifugal type clutch 40c. Also, it is possible to suppress a decrease in speed of rotation of the centrifugal type clutch 40c. Further, it is possible to inhibit the lubricating oil from being increased in temperature. Consequently, it is possible to inhibit the lubricating oil from being decreased in lubrication. In addition, the construction is especially effective in a straddle-type vehicle, which runs on a relatively irregular land such as dirt course, etc., like the offroad type motorcycle according to the embodiment.

While the embodiment has taken the case of the engine unit 12 provided with the centrifugal type clutch 40c and the motorcycle 1 to explain an example of preferred embodiments of the invention, the clutch may be other than a centrifugal type one as far as it is of a wet type.

The embodiment has explained an example, in which the engine 13 is arranged so that a direction, in which the cylinder 18 extends, is relatively close to a vertical direction. However, an arrangement of the engine 13 is not especially limited in the invention. Specifically, the engine 13 is preferably applied also to a straddle-type vehicle arranged so that a direction, in which the cylinder 18 extends, is relatively close to a horizontal direction.

According to the embodiment, the clutch shaft 40 is arranged so as to overlap the connection 42 in a direction along the axis 20e of rotation of the crank shaft 20 (see Figs. 2 and 3). Since the lubricating oil from the connection 42 scatters radially, however, it is not necessarily required that the clutch shaft 40 be arranged so as to overlap the connection 42 in the direction along the axis 20e of rotation of the crank shaft 20. It suffices that at least a portion of the clutch shaft 40 be arranged to be positioned in a region, in which the lubricating oil from the connection 42 scatters.

The oil supply hole 17c is not especially limited in shape. The oil supply hole 17c may be, for example, elliptical, rectangular, and polygonal in shape. Also, a plurality of the oil supply holes 17c may be formed.

According to the embodiment, the lubricating oil scattering from the connection 42 is led directly into the clutch chamber 51 to be supplied to the clutch shaft 40. However, a guide member or the like for changing a direction, in which a lubricating oil scatters, may be arranged in the vicinity of the oil supply holes 17c to cause the lubricating oil, which strikes against the guide member, to be supplied to the clutch shaft 40. However, a belt type continuously variable transmission having a construction, in which a lubricating oil having scattered is once stored and the lubricating oil thus stored is led to the clutch shaft 40 with the use of a pump or the like, does not belong to the invention.

The invention is useful for a straddle-type vehicle provided with a belt type continuously variable transmission. In particular, the invention is useful for a straddle-type vehicle provided with a belt type continuously variable transmission and having a relatively large displacement.

### DESCRIPTION OF REFERENCE NUMERALS AND SIGNS

1: motorcycle
2: body frame
3: head pipe
4: downtube
5: seat pillar
6: front fork
7: front wheel
8: rear arm
9: rear wheel
12: engine unit
13: engine
14: belt type continuously variable transmission (CVT)
15: crank pin
16: reduction mechanism
16a: reduction shaft
17: crank case
17c: oil supply hole
17d: oil reservoir portion
17e: oil discharge hole
20: crank shaft
20a: left crank arm
20b: right crank arm
20d: oil supply passage
20e: axis of rotation of crank shaft
20f: crank shaft body
23: piston
24: connecting rod
32: clutch cover
40: clutch shaft
40a: axis of rotation of clutch shaft
40b: clutch shaft body
40c: centrifugal type clutch
51: clutch chamber
60: oil pump

## Claims

1. An engine unit comprising
a crank shaft (20),
a connecting rod (24) connected to the crank shaft (20),
a lubricating-oil supply mechanism (20d,60), which supplies a lubricating oil to a connection (42) of the crank shaft (20) and the connecting rod (24),
a clutch shaft (40) having a clutch shaft body (40b) arranged in parallel to the crank shaft (20) and a wet type clutch mechanism (40c) mounted to the clutch shaft body (40b), and
a transmission mechanism (16) arranged in parallel to the crank shaft (20) and having a transmission shaft (16a), which meshes with the clutch mechanism (40c), wherein the clutch shaft body (40b) is arranged closer to the crank shaft (20) than to the transmission shaft (16a), **characterized by** a clutch case (40c2), which compartments and forms a clutch chamber (51), in which a clutch shaft (40) is accommodated, and separates the clutch shaft (40) from the crank shaft (20), wherein the clutch case (40c2) is formed with an oil supply hole (17c), through which the lubricating oil from the connection (42) is led into the clutch chamber (51), and the clutch shaft body (40b) is constructed so that a lubricating oil supplied to the connection (42) to scatter is led to the clutch shaft (40), wherein the oil supply hole (17c) is arranged so that at least a portion thereof is positioned above a plane (C) including an axis of rotation (20e) of the crank shaft (20) and an axis of rotation (40a) of the clutch shaft (40).

2. An engine unit according to claim 1, **characterized in that** the clutch shaft (40) is arranged in a region, in which the lubricating oil supplied to the connection (42) scatters upon rotation of the crank shaft (20).

3. An engine unit according to claim 1 or 2, **characterized in that** the crank shaft (20) comprises a crank-shaft body (20f) and a crank pin (15) for connection (42) of the crank-shaft body (20f) and the connecting rod (24), and the oil supply hole (17c) is arranged so that a tangent line (L1) contacting with a lower portion of a circular track (15a) of the crank pin (15) and an upper portion of the oil supply hole (17c) and passing between the oil supply hole (17c) and the circular track (15a) is positioned above a lower end of the clutch shaft (40) as viewed in side view.

4. An engine unit according to one of the claims 1 to 3, **characterized in that** the connection (42) and the clutch shaft (40) overlap each other in a direction along an axis (20e) of rotation of the crank shaft (20).

5. An engine unit according to any preceding claim, **characterized in that** any rotating shaft is not arranged between an axis of rotation (20e) of the crank shaft (20) and an axis of rotation (40a) of the clutch shaft (40).

6. An engine unit, according to any preceding claim, provided with a belt type continuously variable transmission (14), which comprises a primary sheave (36) mounted to the crank shaft (20) to rotate with the crank shaft (20), a secondary sheave (38) mounted to the clutch shaft (40) to rotate with the clutch shaft (40), and a belt (41) wound round the secondary sheave (38) and the primary sheave (36).

7. A straddle-type vehicle comprising the engine unit according to any preceding claim.

## Patentansprüche

1. Eine Motoreinheit mit
einer Kurbelwelle (20),
einer Verbindungsstange (24), verbunden mit der Kurbelwelle (20),
eine Schmieröl-Zufuhrvorrichtung (20d, 60), die ein Schmieröl zu einer Verbindung (42) der Kurbelwelle (20) und der Verbindungsstange (24) zuführt,
einer Kupplungswelle (40), die einen Kupplungswellenkörper (40b) hat, parallel angeordnet zu der Kurbelwelle (20) und eine Nass-Kupplungsvorrichtung (40c), montiert an dem Kurbelwellenkörper (40b), und
einer Getriebevorrichtung (16), die parallel zu der Kurbelwelle (20) angeordnet ist und eine Getriebewelle (16a) hat, der in Eingriff mit der Kupplungsvorrichtung (40c) ist, wobei der Kupplungswellenkörper (40b) näher zu der Kurbelwelle (20) angeordnet ist als zu der Getriebewelle (16a), **gekennzeichnet durch** ein Kupplungsgehäuse (40c2), welches eine Kupplungskammer (51) abteilt und bildet, in der eine Kupplungswelle (40) aufgenommen ist, und die Kupplungswelle (40) von der Kurbelwelle (20) trennt, wobei das Kupplungsgehäuse (40c2) mit einem Ölzuführloch (17c) ausgebildet ist **durch** welches das Schmieröl von der Verbindung (42) zu der Kupplungskammer (51) geführt wird, und der Kupplungswellenkörper (40b) ist so konstruiert, dass ein Schmieröl zum Verteilen zugeführt zu der Verbindung (42) zu der Kupplungswelle (40) geleitet wird, wobei das Ölzufuhrloch (17c) so angeordnet ist, dass zumindest ein Teil des selben über einer Ebene (C) positioniert ist, die eine Drehachse (20e) der Kurbelwelle (20) und eine Drehachse (40a) der Kupplungswelle (40) beinhaltet.

2. Eine Motoreinheit gemäß Anspruch 1, **dadurch gekennzeichnet, dass** die Kupplungswelle (40) in einem Bereich angeordnet ist, in dem das Schmieröl zugeführt zu der Verbindung sich auf Grund der Drehung der Kurbelwelle (20) verteilt.

3. Eine Motoreinheit gemäß Anspruch 1 oder 2, **dadurch gekennzeichnet, dass** die Kurbelwelle (20) einen Kurbelwellenkörper (20f) und einen Kurbelzapfen (15) beinhaltet zur Verbindung (42) des Kurbelwellenkörpers (20f) und der Verbindungsstange (24), und das Ölzufuhrloch (17c) ist so angeordnet, dass eine tangentiale Linie (L1), die einen unteren Abschnitt einer Kreisbahn (15a) des Kurbelzapfens (15) und einen oberen Abschnitt des Ölzufuhrlochs (17c) berührt und sich zwischen dem Ölzufuhrloch (17c) und der Kreisbahn (15a) erstreckt, oberhalb einem unteren Ende der Kupplungswelle (40) positioniert ist, wenn von der Seite betrachtet.

4. Eine Motoreinheit gemäß einem der Ansprüche 1 bis 3, **dadurch gekennzeichnet, dass** die Verbindung (42) und die Kupplungswelle (40) in einer Richtung entlang einer Achse (20e) der Drehung der Kurbelwelle (20) miteinander überlappen.

5. Eine Motoreinheit gemäß irgendeinem der vorangehenden Ansprüche, **dadurch gekennzeichnet, dass** irgendeine Drehwelle nicht zwischen der Drehachse (20e) der Kurbelwelle (20) und einer Drehachse (40a) der Kupplungswelle (40) angeordnet ist.

6. Eine Motoreinheit gemäß irgendeinem der vorangehenden Ansprüche ausgebildet mit einem Riemen-Typ-Kontinuierlich-Variablen-Getriebe (14), das eine primäre Scheibe (36), montiert auf der Kurbelwelle (20) zur Drehung mit der Kurbelwelle (20), eine sekundäre Scheibe (38), montiert auf der Kupplungswelle (40) zur Drehung mit der Kupplungswelle (40), und einen Riemen (41), gewickelt um die sekundäre Scheibe (38) und die primäre Scheibe (36), umfasst.

7. Ein Reit-Typ-Fahrzeug mit einer Motoreinheit gemäß irgendeinem der vorangehenden Ansprüche.

## Revendications

1. Unité de moteur comprenant :
- un vilebrequin (20) ;
- une tige de connexion (24) connecté au vilebrequin (20) ;
- un mécanisme d'alimentation en huile de lubrification (20d, 60), qui alimente en huile de connexion une connexion (42) du vilebrequin à la tige de connexion (24) ;
- un arbre d'embrayage (40) comportant un corps d'arbre d'embrayage (40b) agencé en parallèle à l'arbre d'embrayage (20) et un mécanisme d'embrayage de type en bain d'huile (40c) monté sur le corps d'arbre d'embrayage (40b) ; et
- un mécanisme de transmission (16) agencé en parallèle au vilebrequin (20) et comportant un arbre de transmission (16a), venant en prise avec le mécanisme d'embrayage (40c),
- dans laquelle le corps d'arbre d'embrayage (40b) est agencé plus près du vilebrequin (20) que de l'arbre de transmission (16a), **caractérisée par** un carter d'embrayage (40c2) réalisant une compartimentation, formant une chambre d'embrayage (51), dans laquelle un arbre d'embrayage (40) est logé, et séparant l'arbre d'embrayage (40) du vilebrequin (20),
- dans laquelle le carter d'embrayage (40c2) est formé avec un trou d'alimentation en huile (17c), à travers lequel l'huile de lubrification de la connexion (42) est menée jusqu'à la chambre d'embrayage (51) et le corps d'arbre d'embrayage (40b) est constitué de sorte qu'une huile de lubrification délivrée à la connexion (42) pour se répandre soit menée à l'arbre d'embrayage (40), dans laquelle le trou d'alimentation en huile (17c) est agencé de sorte qu'au moins une partie de celui-ci soit positionnée au-dessus d'un plan incluant un axe de rotation (20e) du vilebrequin (20) et un axe de rotation (40a) de l'arbre d'embrayage (40).

2. Unité de moteur selon la revendication 1, **caractérisée en ce que** l'arbre d'embrayage (40) est agencé dans une région, dans laquelle l'huile de lubrification délivrée à la connexion (42) se répands lors d'une rotation du vilebrequin (20).

3. Unité de moteur selon les revendications 1 ou 2, **caractérisée en ce que** le vilebrequin (20) comprend un corps de vilebrequin (20f) et une broche de vilebrequin (15) pour une connexion (42) du corps de vilebrequin (20f) à la tige de connexion (24) et le trou d'alimentation en huile (17c) est agencé de sorte qu'une ligne tangente (L1) au contact d'une partie inférieure d'une piste circulaire (15a) de la broche de vilebrequin (15) et une partie supérieure du trou d'alimentation en huile (17c) et passant entre le trou d'alimentation en huile (17c) et la piste circulaire (15a) soit positionnée au-dessus d'une extrémité inférieure de l'arbre d'embrayage (40) vu en vue latérale.

4. Unité de moteur selon l'une des revendications 1 à 3, **caractérisée en ce que** la connexion (42) et l'arbre d'embrayage (40) se chevauchent l'un l'autre dans une direction suivant un axe (20e) de rotation du vilebrequin (20).

5. Unité de moteur selon l'une quelconque des revendications précédentes, **caractérisée en ce qu'**un arbre rotatif quelconque n'est pas agencé entre un axe de rotation (20e) du vilebrequin (20) et un axe de rotation (40a) de l'arbre d'embrayage (40).

6. Unité de moteur, selon l'une quelconque des revendications précédentes, pourvue d'une transmission continument variable (14) de type à courroie, comprenant une poulie primaire (36) montée sur le vilebrequin (20) pour tourner avec le vilebrequin (20), une poulie secondaire (38) montée sur l'arbre d'embrayage (40) pour tourner avec l'arbre d'embrayage (40) et une courroie (41) enroulée autour de la poulie secondaire (38) et de la poulie primaire (36).

7. Véhicule de type monté à califourchon comprenant une unité de moteur selon l'une quelconque des revendications précédentes.
